# EUROPÄISCHE PATENTSCHRIFT

(11) **EP 0 687 278 B1**
(45) Veröffentlichungstag und Bekanntmachung des Hinweises auf die Patenterteilung: **02.05.1997**
(21) Anmeldenummer: 94909047.6
(22) Anmeldetag: 25.02.1994
(51) Int. Cl.: C08G 2/14, C08G 2/30, C11D 3/00

(54) **POLYACETALBLÖCKE ENTHALTENDE POLYMERISATE, VERFAHREN ZU IHRER HERSTELLUNG UND IHRE VERWENDUNG**
POLYMERS CONTAINING POLYACETAL BLOCKS, METHOD OF PRODUCING THEM AND THEIR USE
POLYMERISATS CONTENANT DES BLOCS POLYACETAL, LEUR PROCEDE DE PREPARATION ET LEUR UTILISATION

(30) Priorität: 06.03.1993 DE 4307112
(43) Veröffentlichungstag der Anmeldung: 20.12.1995
(73) Patentinhaber: BASF Aktiengesellschaft, 67063 Ludwigshafen (DE)
(72) Erfinder: FUNHOFF, Angelika, D-69126 Heidelberg (DE); BOECKH, Dieter, D-67117 Limburgerhof (DE); KRONER, Matthias, D-67304 Eisenberg (DE); BAUR, Richard, D-67112 Mutterstadt (DE); KUD, Alexander, D-55234 Eppelsheim (DE); SCHORNICK, Gunnar, D-67271 Neuleiningen (DE); SCHWENDEMANN, Volker, D-67434 Neustadt (DE)
(86) Internationale Anmeldenummer: EP9400535
(87) Internationale Veröffentlichungsnummer: WO9420557

(56) Entgegenhaltungen:
- US-A- 4 731 441

## Beschreibung

Die Erfindung betrifft Polyacetalblöcke enthaltende Polymerisate, Verfahren zur ihrer Herstellung und ihre Verwendung als Additiv zu phosphatfreien und phosphatreduzierten Wasch- und Reinigungsmitteln, als Scale-Inhibitor und als Dispergiermittel für Pigmente.

Aus der EP-B 0 001 004 sind polymere Acetalcarboxylate bekannt, die durch Polymerisieren von Glyoxylsäureestern in Gegenwart von Initiatoren erhältlich sind. Diese Polymerisate enthalten mindestens 4 Einheiten der Formel 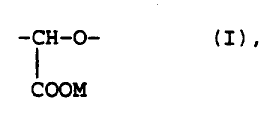 wobei M für Alkalimetall-, Ammonium-, C₁- bis C₄-Alkyl- und Alkanolamingruppen steht. Diese Polymeren werden in Mengen von mindestens 1 Gew.-% als Builder in Waschmitteln eingesetzt. Die bekannten polymeren Acetalcarboxylate hydrolysieren relativ rasch in saurem Medium unter Bildung von Komponenten, die biologisch abbaubar sind. Die Herstellung der Polymeren erfolgt durch Polymerisieren von Glyoxylsäureestern mit geeigneten Initiatoren, wie starken Lewis-Säuren oder Natriumdiethylmethylmalonat. Die dabei entstehenden Polymerisate weisen OH-Endgruppen auf. Um die Polymerisate zu stabilisieren, so daß sie beim Einsatz in Waschmitteln ausreichend stabil sind, werden die Endgruppen z. B. durch Umsetzung mit Ethylvinylether oder Ethylenoxid verschlossen.

Aus der WO/A-92/15629 sind Polyacetale bekannt, die Einheiten der Formel 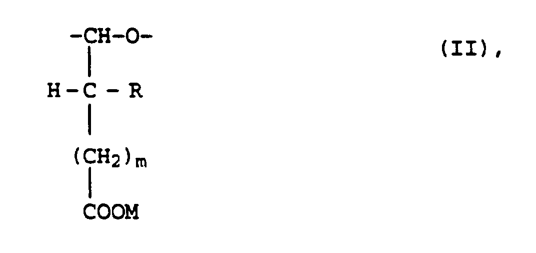 in der
- R =: H, C₁- bis C₄-Alkyl, COOM,
- M =: H, C₁- bis C₄-Alkyl, Alkalimetall-, Ammonium- und Alkanolamingruppe
- R² =: C₁- bis C₄-Alkyl und
- m =: 0 bis 9
bedeuten, in Gegenwart von Initiatoren polymerisiert und gegebenenfalls die Estergruppen des Polymeren mit Alkalimetallbasen, Ammoniak oder Alkanolaminen hydrolysiert.

Aus Journal of Polymer Science: Polymer Letters Edition, Vol. 18, 293-297 (1980) ist die Herstellung von Polyacetalen durch säure katalysierte Anlagerung von Polyolen an Divinylether bekannt. So erhält man beispielsweise durch Polyaddition von trans-1,4-Cyclohexandimethanol an Butandioldivinylether unter der katalytischen Wirkung von p-Toluolsulfonsäure ein Polyacetal mit einem Molekulargewicht von 200 000. Die beschriebenen Polyacetale werden in der Medizin zur kontrollierten Freisetzung von Wirkstoffen verwendet.

Der Erfindung liegt die Aufgabe zugrunde, neue Stoffe und Additive für Wasch- und Reinigungsmittel sowie neue Scale-Inhibitoren und Dispergiermittel zur Verfügung zu stellen.

Die Aufgabe wird gelöst mit Polyacetalblöcke enthaltenden Polymerisaten, die durch Polymerisieren von Aldehydgruppen enthaltenden Carbonsäureestern, gegebenenfalls zusammen mit bis zu 50 Mol.-% copolymerisierbaren Monomeren, in Gegenwart von Initiatoren und Reaktion der Polymerisate mit mindestens bifunktionellen Vernetzern in Gegenwart von Säuren oder Lewissäuren und gegebenenfalls Hydrolyse der einpolymerisierenden Estergruppen erhältlich sind.

Diese Polymerisate werden dadurch erhalten, daß man Aldehydgruppen enthaltende Carbonsäureester gegebenenfalls in Gegenwart von damit copolymerisierbaren Monomeren in Gegenwart von Initiatoren polymerisiert und die dabei entstehenden, Polymerisate mit mindestens bifunktionellen Vernetzern in Gegenwart von Säuren oder Lewissäuren umsetzt. Die dabei entstehenden Polyacetalblöcke enthaltenden Polymerisate werden als Additiv zu phosphatfreien und phosphatreduzierten Wasch- und Reinigungsmitteln sowie als Scale-Inhibitor und als Dispergiermittel für Pigmente verwendet.

Aldehydgruppen enthaltende Carbonsäureester sind beispielsweise Glyoxylsäureester, die durch Veresterung von Glyoxylsäure mit C₁- bis C₂₀-Alkoholen erhältlich sind, z. B. Glyoxylsäuremethylester, Glyoxylsäureethylester, Glyoxylsäure-n-propylester,

Glyoxylsaureisopropylester, Glyoxylsäure-n-butylester, Glyoxylsaureisobutylester, Glyoxylsäurestearylester und Glyoxylsäurepalmitylester. Besonders bevorzugt ist die Verwendung von Glyoxylsäuremethylester und Glyoxylsäureethylester. Zu den Aldehydgruppen enthaltenden Carbonsäureestern gehören auch die oben zum Stand der Technik angegebenen Formylester der Formel III. Diese Ester können beispielsweise durch Hydroformylierung von monoethylenisch ungesättigten Carbonsäureestern mit Kohlenmonoxid und Wasserstoff bei höheren Temperaturen und Drücken hergestellt werden, vgl. beispielsweise J. Falbe, New Synthesis with Carbonmonoxide, Springer Verlag 1980 oder J. Wender und P. Pino, Organic Synthesis via Metal Carbonyls, J. Wiley & Sons, 1977. Bevorzugt eingesetzte Formylgruppen enthaltende Carbonsäureester der Formel II sind solche Verbindungen, bei denen
- R =: H oder COOM,
- m =: 0 bis 2
- M =: Methyl, Ethyl, Na, K, Ammonium- oder Ethanolamingruppe
bedeuten. Die Glyoxylsäureester und die Verbindungen der Formel III können in Mischung mit bis zu 50, vorzugsweise bis zu 30 Mol.-% mindestens eines Comonomeren aus der Gruppe der C₁- bis C₁₀-Aldehyde, C₂- bis C₄-Alkylenoxide, Epihalogenhydrine, cyclischen von Diolen abgeleiteten Formalen oder cyclischen Polymeren des Formaldehyds und Epoxybernsteinsaure copolymerisiert werden.

Die Polymerisation wird in Substanz oder in einem Lösemittel durchgeführt, vgl. EP-B-0 001 004. Als Lösemittel eignen sich beispielsweise halogenierte Kohlenwasserstoffe, wie Dichlormethan und Trichlorethan, aromatische Kohlenwasserstoffe, wie Benzol, Toluol, Isopropylbenzol und Xylol, Ether wie Diethylether, Dioxan und Tetrahydrofuran oder Diethylenglykoldimethylether sowie Dimethylformamid und Acetonitril. Bevorzugt angewendete Lösemittel sind Ether, Acetonitril und Dichlormethan. Die Lösemittel sollen möglichst wasserfrei oder weitgehend wasserfrei sein. Auch die Monomeren sollten wasserfrei sein. Es empfiehlt sich, sie vor der Polymerisation mit Hilfe einer Destillation zu reinigen. Der Wassergehalt der polymerisierenden Mischung liegt üblicherweise unterhalb von 0,1 Gew.-%. Die Polymerisation wird vorzugsweise unter einer Inertgasatmosphäre, z. B. unter Stickstoff, Argon, Helium oder Neon durchgeführt.

Als Initiatoren eignen sich beispielsweise Amine, wie Triethylamin oder der 2-Hydroxypyridin-H₂O-komplex, starke Lewis-Säuren, wie Bortrifluorid oder Bortrifluoridetherate, Antimonpentafluorid, Phosphorpentafluorid, Phosphorpentoxid, Zinnchlorid, Zinnalkyle, Titanhalogenide und Titanalkyle, Trifluoressigsäure, Alkalimetallalkoholate, Butyllithium, Grignard-Verbindungen, Kaliumcarbonat sowie Natriumdiethylmalonat, Natriumdimethylmalonat und Natriumdiethylmethylmalonat. Die Polymerisation kann außerdem in Gegenwart geringer Mengen von Hydroxi- und Cyanidionen erfolgen. Die Initiatoren werden in Mengen von 0,0001 bis 15, vorzugsweise 0,0001 bis 5 Gew.-% eingesetzt. Bevorzugte Polymerisationsinitiatoren zur Herstellung der Polyacetale sind Bortrifluoridetherat, Natriumdiethylmethylmalonat und Triethylamin.

Um die Polymerisation auszulösen, mischt man Monomere, Initiator und gegebenenfalls das Lösemittel. Die Polymerisation wird vorzugsweise unter Ausschluß von Wasser unter einer Inertgasatmosphäre, z.B. unter Helium, Argon oder Stickstoff, durchgeführt. Das Mischen der Substanzen kann in beliebiger Reihenfolge, absatzweise oder kontinuierlich geschehen. Die Polymerisation wird üblicherweise in dem Temperaturbereich von -100 bis 100, vorzugsweise -70 bis +80°C durchgeführt. Besonders bevorzugt ist der Temperaturbereich von -20 bis +30°C für die Polymerisation. In Abhängigkeit von der Temperatur und dem Initiator dauert die Polymerisation einige Minuten bis zu einigen Tagen. Sofern die Monomeren in einem Lösemittel polymerisiert werden, beträgt die Konzentration der Monomeren darin üblicherweise 5 bis 95, vorzugsweise 15 bis 90 Gew.-%.

Bei der Polymerisation der Aldehydgruppen enthaltenden Carbonsäureester entstehen Polyacetale, die OH-Endgruppen aufweisen. Diese Polymerisate können isoliert oder auch direkt mit mindestens bifunktionellen Vernetzern in Gegenwart von Säuren oder Lewis-Säuren umgesetzt werden. Hierbei werden die OH-Endgruppen enthaltenden Polyacetale zu Polymeren mit höheren Molgewichten verknüpft. Die Molgewichtserhöhung kann beispielsweise anhand des K-Werts der Polymerisate belegt werden. So entsteht beispielsweise aus einem Polyglyoxylsäuremethylester mit einem K-Wert von 25 nach der Umsetzung mit einem Divinylether ein Polyglyoxylacetatblöcke enthaltendes Polymerisat mit einem K-Wert von 42.

Als mindestens bifunktionelle Vernetzer kommen Di- und Polyvinylether in Betracht, die beispielsweise durch Vinylierung von Diolen oder 3- und mehrwertigen Alkoholen erhältlich sind. Geeignete Divinylether sind beispielsweise Ethylenglykoldivinylether, Propylenglykoldivinylether, Butandioldivinylether, Butindioldivinylether, Butendioldivinylether, Hexandioldivinylether, Bis(hydroxymethyl)cyclohexandivinylether, Diethylenglykoldivinylether, Triethylenglykoldivinylether, Tetraethylenglykolvinylether sowie Divinylether von Polyethylenglykolen mit einem Molekulargewicht des Polyethylenglykols bis zu 20 000, Polypropylenglykoldivinylether mit Molekulargewichten bis zu 10 000 sowie Divinylether von Copolymerisaten aus Ethylenoxid und Propylenoxid mit Molekulargewichten bis zu 10 000 sowie Polytetrahydrofurandivinylether. Außer den vinylierten Diolen kommen auch andere Vinylether, beispielsweise vinylierte Zucker wie Dianhydrosorbitdivinylether als Vernetzer in Betracht. Bevorzugt eingesetzte Vernetzer sind folgende Divinylether: 1,4-Butandioldivinylether, 1,6-Hexandiolvinylether, Ethylenglykoldivinylether, Diethylen- und Triethylenglykoldivinylether.

Außerdem eignen sich als Vernetzer Diepoxide. Solche Verbindungen sind beispielsweise dadurch erhältlich, daß man Glykole im Molverhältnis von 1 zu mindestens 2 mit Epichlorhydrin umsetzt und die Umsetzungsprodukte mit Basen behandelt; anstelle von Glykol können Polyglykole oder Polymerisate aus Ethylenoxid und Propylenoxid zur Herstellung der Diepoxide eingesetzt werden. Von besonderem technischen Interesse sind hierbei Polyalkylenglykole mit 2- bis 40-Ethylenoxid-Einheiten, aus denen durch Umsetzung mit Epichlorhytirin und Behandlung mit Basen Diepoxide entstehen. Weitere geeignete Vernetzungsmittel sind Diester, wie Malonsäurediester, Benzalmalonsäurediester, Azelainsäurediester, Phthalsäurediester, Oxalsäurediester, Bernsteinsäurediester, Glutarsäurediester, Pimelinsäurediester, Acetylendicarbonsäurediester, Tartronsäurediester, Äpfelsäurediester, Mesoxalsäurediester, Weinsäurediester, Zitronensäureester, Aconitsäureester, Acetondicarbonsäureester, Hydroxynaleinsäureester, Hydrofumarsäureester und Oxalsäureester.

Außerdem eignen sich als Vernetzer Anhydride wie beispielsweise Maleinsäureanhydrid, Essigsäureanhydrid, Bernsteinsäureanhydrid, Butantetracarbonsäuredianhydrid und Benzoltetracarbonsäuredianhydrid.

Weitere geeignete Vernetzer sind Dinitrile wie Adipinsäuredinitril, Bernsteinsäuredinitril und Glutarsäuredinitril.

Die Funktionalitäten der Vernetzer können auch gemischt vorliegen, beispielsweise eine Ester- und eine Amidgruppe etc. Außerdem eignen sich Verbindungen mit 2 funktionellen Gruppen wie beispielsweise Säurechloridgruppen, Saureamidgruppen und Imidoestergruppen als Vernetzer.

Die durch Polymerisation von Aldehydgruppen enthaltenden Carbonsäureestern entstehenden Polyacetalblöcke mit OH-Endgruppen werden mit den mindestens bifunktionellen Vernetzern vorzugsweise im Molverhältnis 1:2 bis 1:1,001 zur Reaktion gebracht. Für die Reaktion reichen solche Mengen an Vernetzer aus, daß sämtliche OH-Endgruppen der Polyacetalblöcke abreagieren. Falls die Herstellung der Polyglyoxylate in Gegenwart von Lewis-Säuren vorgenommen wurde, erfolgt bereits bei Zusatz von Vernetzern zur polymerisierenden Mischung eine Verknüpfung von Polyglyoxylatblöcken zu Polymeren eines höheren Molekulargewichts. Sofern man jedoch die Polymerisation mit Hilfe von Natriumdiethylmalonat initiiert hat, fügt man nach Beendigung der Polymerisation der Aldehydgruppen enthaltenden Carbonsäureester eine Säure oder eine Lewis-Säure sowie einen mindestens bifunktionellen Vernetzer zu und erreicht damit eine Verknüpfung von Polyglyoxylatblöcken.

Als Initiatoren für die Umsetzung von OH-Endgruppen enthaltenden Polyacetalen von Divinylethern benötigt man organische oder anorganische Sauren bzw. Säure bildende Verbindungen. Geeignete Katalysatoren sind beispielsweise C₁- bis C₁₀-Carbonsäuren wie Ameisensäure, Essigsäure, Propionsäure, Äpfelsäure, Adipinsäure, Weinsäure, Bernsteinsäure, Oxalsäure, Zitronensäure oder Maleinsäure, ein- oder mehrfach halogenierte Carbonsäuren, wie Trifluoressigsaure oder Trichloressigsäure, Chlorwasserstoff, Bromwasserstoff, Jodwasserstoff, Schwefelsäure, Phosphorsäure, Benzolsulfonsäure, p-Toluolsulfonsaure, Borsäure, Ascorbinsäure, saures Aluminiumoxid, Aluminiumsulfat, Kaliumaluminiumsulfat, Eisen-II-Sulfat, Eisen-III-Sulfat, Bortrifluorid, Bortrichlorid, Zinn-IV-Chlorid, Aluminiumtrichlorid, Ionenaustauscher in der Säureform und mit Säure beladene inerte feste Stoffe. Vorzugsweise verwendet man als Initiatoren Weinsäure, Oxalsäure, Trifluoressigsäure oder Zitronensäure. Selbstverständlich kann man auch Gemische verschiedener Säuren als Katalysator einsetzen. Die Initiatoren werden den OH-Endgruppen enthaltenden Polyacetalen vorzugsweise im Temperaturbereich -20 bis +60°C zugemischt und die Mischung dann auf Reaktionstemperatur erhitzt. Der Katalysator wird in Mengen von 1 ppm bis 10 Gew.-%, bevorzugt in Mengen von 10 ppm bis 1 Gew.-% angewendet. Die Verknüpfung der OH-Endgruppen enthaltenden Polyacetale mit den Vernetzungsmitteln erfolgt üblicherweise im Temperaturbereich von -20 bis 170, vorzugsweise 40 bis 120°C.

Als Aldehydgruppen enthaltende Carbonsäureester setzt man vorzugsweise Glykolsäuremethylester ein und verknüpft die so erhältlichen OH-Endgruppen enthaltenden Polyacetalblöcke vorzugsweise mit 2-fach vinylierten Diolen mit 2- bis 6-C-Atomen, 2-fach vinylierten Polyalkylenglykolen oder zweifach vinylierten Polytetrahydrofuranen. Die Polyalkylenglykole und die Polytetrahydrofurane haben vorzugsweise Molmassen von 100 bis 2000. Wie oben bereits ausgeführt, erhalt man bei der Umsetzung der OH-Endgruppen enthaltenden Polyacetale Polymerisate mit höheren Molgewichten.

Die erfindungsgemäß erhältlichen Polyacetalblöcke aufweisenden Polymerisate, vorzugsweise die mit Vernetzern verknüpften Methyl- und Ethylester der Glyoxylsäure - werden im Anschluß an die Verknüpfungsreaktion mit Basen behandelt, um die Estergruppen in die Salze bzw. in die freien Säuren zu überführen. Die erfindungsgemäßen Polyacetalblöcke enthaltenden Polymerisate haben in 1 %iger wäßriger Lösung in Form des Natriumsalzes bei einem pH-Wert von 11 K-Werte nach Fikentscher von 8 bis 100. Die erfindungsgemäßen Polyacetalblöcke enthaltenden Polymerisate sind bei pH-Werten unterhalb von 7 leicht hydrolysierbar und biologisch abbaubar. Sie eignen sich beispielsweise als Additiv zu phosphatfreien und phosphatreduzierten Wasch- und Reinigungsmitteln und als Scale-Inhibitor. Außerdem sind sie als Dispergiermittel für Pigmente verwendbar, insbesondere zum Dispergieren von Tonmineralien, Eisenoxiden, Titandioxid und Kreide.

Unter phosphatreduzierten Waschmitteln sollen solche Waschmittelformulierungen verstanden werden, deren Phosphatgehalt weniger als 25 Gew.-%, berechnet auf Natriumtriphosphat beträgt.

Die Zusammensetzung der Wasch- und Reinigungsmittelformulierungen kann sehr unterschiedlich sein. Wasch- und Reinigungsformulierungen enthalten üblicherweise 2 bis 50 Gew.-% Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Eng. News, Band 67, 35 (1989), tabellarisch dargestellt. Weitere Angaben über die Zusammensetzung von Wasch- und Reinigungsmittel können der WO-A-90/13581 sowie Ullmanns Encyklopädie der technischen Chemie, Verlag Chemie, Weinheim 1983, 4. Auflage, Seiten 63-160, entnommen werden. Außerdem sind solche Waschmittelformulierungen von Interesse, die bis zu 60 Gew.-% eines Alkalisilikats und bis zu 10 Gew.-% eines erfindungsgemäß hergestellten Polyacetals enthalten.

Die Waschmittel können gegebenenfalls noch ein Bleichmittel enthalten, z. B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z. B. Komplexbildner, Trübungsmittel, optische Aufheller, Enzyme, Parfümöle, Farbübertragungsinhibitoren, Vergrauungsinhibitoren und/oder Bleichaktivatoren sowie Zeolith.

Die mit Vernetzern verknüpften Polyacetalblöcke enthaltenden Polymerisate werden vorzugsweise nach der Hydrolyse mit Basen wie Natronlauge, Kalilauge, Ethanolamin, Triethanolamin oder Morpholin in Wasch- und Reinigungsmitteln in Mengen von 0,5 bis 20, vorzugsweise 2 bis 10 Gew.-% eingesetzt.

Die hydrolysierten und neutralisierten Polyacetalblöcke enthaltenden Polymerisate eignen sich außerdem als Dispergiermittel für feinteilige Stoffe, z. B. Tone, Kreide, Calciumcarbonat, Titandioxid, Eisenoxide, Kaoline, Aluminiumoxid, Zement und oxidische Glasuren für keramische Zwecke. Bei der Anwendung als Dispergiermittel sind üblicherweise Mengen von 0,02 bis 5 Gew.-%, vorzugsweise 0,2 bis 2 Gew.-%, bezogen auf die feinteiligen Stoffe, notwendig.

Die erfindungsgemäßen Polymerisate werden außerdem als Scale-Inhibitoren eingesetzt, z. B. in Meerwasser-Entsalzungsanlagen, bei der Dampferzeugung oder in Kühlwasserkreisläufen. Die Scale-Inhibitoren werden üblicherweise in Mengen von 0,1 bis 1000 ppm, vorzugsweise 1 bis 500 ppm eingesetzt.

Die Prozentangaben in den Beispielen sind Gewichtsprozent; der K-Wert der Polyacetalblöcke enthaltenden Polymerisate wurde in 1 %iger wäßriger Lösung bei einer Temperatur von 25°C am Na-Salz der Polymeren bei pH 11 nach H. Fikentscher gemessen, vgl. Cellulose-Chemie, Bd. 13, 58-64 und 71-74 (1932).

### Beispiel 1

In einem 100 ml fassenden Einhalskolben, der mit einem Magnetrührer und einer Vorrichtung für das Arbeiten unter inerter Atmosphäre ausgestattet war, wurden unter einem Stickstoffstrom 8,8 g (100 mmol) Glyoxylsäuremethylester und 8,8 g (86 mmol) Butandiolformal sowie 4,5 ml Dichlormethan vorgelegt und auf eine Temperatur von 5°C abgekühlt. Die Mischung wurde dann mit 20 µl Bortrifluoridetherat versetzt und 1,5 Stunden bei 5°C gerührt, dann mit 4,5 g (5 ml, 31,8 mmol) 1,4-Butandioldivinylether versetzt und 20 Stunden bei Raumtemperatur belassen. Dann gab man 10 ml 1 N Natronlauge und 4 ml Aceton zu, rührte das Reaktionsgemisch 5 Minuten bei 5°C und destillierte anschließend bei einer Temperatur von 40°C die flüchtigen Anteile im Vakuum ab. Durch Zugabe von 20 ml 10 N Natronlauge wurde das Reaktionsprodukt hydrolysiert und das Polymerisat anschließend aus einer Aceton/Methanol-Mischung (Gewichtsverhältnis 1 : 1) gefällt. Die Ausbeute betrug 71 %, bezogen auf das Natriumsalz des Copolymeren. Das neutralisierte Copolymerisat hatte einen K-Wert von 42 (gemessen in 1 %iger wäßriger Lösung).

### Vergleichsbeispiel 1

In der in Beispiel 1 beschriebenen Apparatur wurden unter einem Argonstrom 4,5 ml Dichlormethan, 8,8 g (100 mmol) Glyoxylsäuremethylester und 8,8 g (86 mmol) Butandiolformal vorgelegt und auf eine Temperatur von 5°C abgekühlt. Zu dieser Mischung gab man 20 µl Bortrifluoridetherat, wodurch die Polymerisation initiiert wurde. Man rührte das Reaktionsgemisch 1,5 Stunden bei einer Temperatur von 5°C und gab dann 0,31 ml (459 mg, 4 mmol) Trifluoressigsäure und 3,0 ml (2,3 g, 32 mmol) Ethylvinylether zu und rührte das Reaktionsgemisch zunächst 30 Minuten bei 5°C und anschließend 5 Stunden bei Raumtemperatur und ließ die Mischung danach 20 Stunden bei Raumtemperatur stehen. Das Reaktionsgemisch wurde dann auf 5°C abgekühlt und mit 10 ml 1 N Natronlauge versetzt und 5 Minuten gerührt. Danach entfernte man die flüchtigen Anteile unter vermindertem Druck bei Raumtemperatur und hydrolysierte anschließend die viskose Masse durch Zugabe von 20 ml 10 N Natronlauge. Das hydrolysierte Copolymerisat wurde aus einer Aceton/Methanolmischung (Verhältnis 9 : 1) gefällt. Das Copolymerisat wurde anschließend in Methanol aufgerührt und anschließend getrocknet. Die Ausbeute betrug 28 %, bezogen auf das Natriumsalz des Copolymeren. Das hydrolysierte Copolymerisat besaß einen K-Wert von 25 (gemessen 1 %ig in Wasser).

### Beispiel 2

In die im Beispiel 1 beschriebene Apparatur wurden parallel, jedoch getrennt voneinander unter einem Stickstoffstrom 211 g (2,4 mol) Glyoxylsäuremethylester und 53,9 ml einer 0,1 %igen Lösung von Triethylamin in Acetonitril (0,54 mmol) innerhalb von 30 Minuten bei Raumtemperatur eingetragen und danach 1 Stunde bei Raumtemperatur gerührt. Das so erhaltene OH-Endgruppen aufweisende Polyacetal wurde in zwei gleiche Teile geteilt. 105,5 g (1,2 mol) dieses Polyacetals wurden auf 5°C abgekühlt und nacheinander mit 1,57 ml (0,02 mol) Trifluoressigsäure und 45,4 g (0,32 mol) 1,4-Butandioldivinylether versetzt. Diese Mischung wurde 45 Minuten bei 5°C und danach noch 5 Stunden bei Raumtemperatur gerührt. Nach weiteren 15 Stunden wurde das Reaktionsgemisch bei 5°C mit 20 ml 1 N Natronlauge versetzt, die flüchtigen Bestandteile abdestilliert und anschließend mit 125 ml 10 N Natronlauge (1,25 mol) verseift. Das Produkt wurde aus einer Mischung von gleichen Teilen Methanol und Aceton gefällt. Die Ausbeute des Natriumsalzes des Polyacetalblöcke enthaltenden Polymeren betrug 80 %. Eine 1 %ige wäßrige Natriumsalzlösung des Polymeren besaß einen K-Wert von 21.

### Vergleichsbeispiel 2

Zur zweiten Hälfte des im Beispiel 2 beschriebenen OH-Endgruppen aufweisenden Polyacetals wurden bei 5°C unter einem Stickstoffstrom 1,57 ml (0,02 mol) Trifluoressigsäure und 23,1 g (0,32 mol) Ethylvinylether zugegeben. Diese Mischung wurde 45 Minuten bei 5°C und danach noch 5 Stunden bei Raumtemperatur gerührt. Nach weiteren 15 Stunden wurde das Reaktionsgemisch bei 5°C mit 20 ml 1 N Natronlauge versetzt, die flüchtigen Bestandteile abdestilliert und anschließend mit 125 ml 10 N Natronlauge (1,25 mol) verseift. Das Produkt wurde aus einer Mischung von gleichen Teilen Methanol und Aceton gefällt. Die Ausbeute des Natriumsalzes des Polymeren betrug 78 %, der K-Wert 13 (in 1 %iger wäßriger Lösung).

Um eine Aussage über die Wirksamkeit der Polymeren in Waschmitteln machen zu können, wurde ihre Wirksamkeit bezüglich der Clay-Dispergierung geprüft. Mit dem im folgenden beschriebenen Clay-Dispergiertest (CD-Test) kann auf einfache Weise die Dispergierfähigkeit von Polyelektrolyten beurteilt werden.

### CD-Test

Als Modell für partikulären Schmutz wird feingemahlener China-Clay SPS 151 benutzt. 1 g Clay wird unter Zusatz von 1 ml einer 1 %igen Natriumsalzlösung des Polyelektrolyten in 98 ml Wasser 10 Minuten in einem Standzylinder (100 ml) intensiv dispergiert. Sofort nach dem Rühren nimmt man aus der Mitte des Standzylinders eine Probe von 2,5 ml und bestimmt nach dem Verdünnen auf 25 ml die Trübung der Dispersion mit einem Turbidimeter. Nach 30- bzw. 60-minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, desto höher sind die gemessenen Trübungswerte und um so stabiler ist die Dispersion. Als zweite physikalische Meßgröße wird die Dispersionskonstante bestimmt, die das zeitliche Verhalten des Sedimentationsprozesses beschreibt. Da der Sedimentationsprozeß annähernd durch ein mono-exponentielles Zeitgesetz beschrieben werden kann, gibt τ die Zeit an, in der die Trübung auf 1/e-tel des Ausgangszustandes zum Zeitpunkt t=O abfällt.

Je höher ein Wert für τ ist, um so langsamer setzt sich die Dispersion ab.

Die Trübungswerte sind angegeben in NTU (nephelometric turbidity units):

| | Trübungswerte nach | | | |
|---|---|---|---|---|
| | t=0 | t=30 min | t=60 | τ |
| Beispiel 1 | 770 | 610 | 530 | 167 |
| Vergleichsbeispiel 1 | 720 | 400 | 360 | 139 |

## Patentansprüche

1. Polyacetalblöcke enthaltende Polymerisate, die durch Polymerisieren von Aldehydgruppen enthaltenden Carbonsäureestern, gegebenenfalls zusammen mit bis zu 50 Mol-% copolymerisierbaren Monomeren aus der Gruppe der C₁- bis C₁₀-Aldehyde, C₂- bis C₄-Alkylenoxide, Epihalogenhydrine, cyclischen von Diolen abgeleiteten Formalen, cyclischen Polymeren des Formaldehyds und Epoxybernsteinsäure, in Gegenwart von Initiatoren erhältlich sind, dadurch gekennzeichnet, daß man die Polymerisate mit mindestens bifunktionellen Vernetzern aus der Gruppe der Di- und Polyvinylether, Diepoxide, Diester, Anhydride, Dinitrile, Verbindungen, die eine Ester- und eine Amidgruppe enthalten oder Verbindungen mit zwei funktionellen Gruppen ausgewählt aus Säurechlorid-, Säureamid- und Imidoestergruppen, in Gegenwart von Säuren oder Lewis-Säuren vorzugsweise im Molverhältnis 1:2 bis 1:1,001 umsetzt und gegebenenfalls die einpolymerisierzen Estergruppen hydrolysiert.

2. Verfahren zur Herstellung von Polyacetalblöcken enthaltenden Polymerisaten nach Anspruch 1, dadurch gekennzeichnet, daß man Aldehydgruppen enthaltende Carbonsäureester gegebenenfalls in Gegenwart von damit copolymerisierbaren Monomeren aus der Gruppe der C₁- bis C₁₀-Aldehyde, C₂- bis C₄-Alkylenoxide, Epihalogenhydrine, cyclischen von Diolen abgeleiteten Formalen, cyclischen Polymeren des Formaldehyds und Epoxybernsteinsäure, in Gegenwart von Initiatoren polymerisiert und die entstehenden Polymerisate mit mindestens bifunktionellen Vernetzern aus der Gruppe der Di- und Polyvinylether, Diepoxide, Diester, Anhydride, Dinitrile, Verbindungen, die eine Ester und eine Amidgruppe enthalten oder Verbindungen mit zwei funktionellen Gruppen, ausgewählt aus Säurechlorid-, Säureamid- und Imidoestergruppen, in Gegenwart von Säuren oder Lewis-Säuren umsetzt und gegebenenfalls die einpolymerisierten Estergruppen hydrolysiert.

3. Verfahren nach Anspruch 2, dadurch gekennzeichnet, daß man als Aldehydgruppen enthaltende Carbonsäureester Glyoxylsäureester von Alkoholen mit 1 bis 4 C-Atomen und als mindestens bifunktionelle Vernetzer Divinylether, Diepoxyde, Anhydride, Dinitrile, Diester und/oder Diamide einsetzt.

4. Verfahren nach Anspruch 2, dadurch gekennzeichnet, daß man als Aldehydgruppen enthaltende Carbonsäureester Glyoxylsäuremethylester und als Vernetzer zweifach vinylierte Diole mit 2 bis 6 C-Atomen, zweifach vinylierte Polyalkylenglykole oder zweifach vinylierte Polytetrahydrofurane einsetzt.

5. Verwendung der Polyacetalblöcke enthaltenden Polymerisate nach Anspruch 1 als Additiv zu phosphatfreien und phosphatreduzierten Wasch- und Reinigungsmitteln und als Scale-Inhibitoren.

6. Verwendung der Polyacetalblöcke enthaltenden Polymerisate nach Anspruch 1 als Dispergiermittel für Pigmente.

## Claims

1. A polymer containing polyacetal blocks, which is obtainable by polymerizing carboxylates containing aldehyde groups, if required together with up to 50 mol% of copolymerizable monomers selected from the group consisting of the C₁-C₁₀-aldehydes, C₂-C₄-alkylene oxides, epihalohydrins, cyclic formals derived from diols, cyclic polymers of formaldehyde and epoxysuccinic acid, in the presence of initiators, which comprises reacting the polymer with at least bifunctional crosslinking agents selected from the group consisting of the di- and polyvinyl ethers, diepoxides, diesters, anhydrides, dinitriles, compounds which contain an ester or an amido group and compounds having two functional groups selected from acyl chloride, amido and imido ester groups, in the presence of acids or Lewis acids, preferably in a molar ratio of from 1:2 to 1:1.001, and, if required, hydrolyzing the ester groups present as polymerized units.

2. A process for the preparation of polymers containing polyacetal blocks as claimed in claim 1, wherein carboxylates containing aldehyde groups are polymerized in the presence or absence of monomers copolymerizable therewith, selected from the group consisting of the C₁-C₁₀-aldehydes, C₂-C₄-alkylene oxides, epihalohydrins, cyclic formals derived from diols, cyclic polymers of formaldehyde and epoxysuccinic acid, in the presence of initiators, and the resulting polymers are reacted with at least bifunctional crosslinking agents selected from the group consisting of the di- and polyvinyl ethers, diepoxides, diesters, anhydrides, dinitriles, compounds which contain an ester and an amido group or compounds having two functional groups selected from acyl chloride, amido and imido ester groups, in the presence of acids or Lewis acids and, if required, the ester groups present as polymerized units are hydrolyzed.

3. A process as claimed in claim 2, wherein glyoxylates of alcohols of 1 to 4 carbon atoms are used as the carboxylates containing aldehyde groups, and divinyl ethers, diepoxides, anhydrides, dinitriles, diesters and/or diamides are used as the at least bifunctional crosslinking agents.

4. A process as claimed in claim 2, wherein methyl glyoxylate is used as the carboxylates containing aldehyde groups and divinylated diols of 2 to 6 carbon atoms, divinylated polyalkylene glycols or divinylated polytetrahydrofurans are used as crosslinking agents.

5. Use of the polymer containing polyacetal blocks as claimed in claim 1 as an additive in phosphate-free and reduced-phosphate detergents and cleaning agents and as a scale inhibitor.

6. Use of a polymer containing polyacetal blocks as claimed in claim 1 as a dispersant for pigments.

## Revendications

1. Polymères contenant des blocs polyacétal, obtenus par polymérisation, en présence d'amorceurs, d'esters d'acides carboxyliques contenant des groupements aldéhyde, éventuellement avec 50% en moles au maximum de monomères copolymérisables du groupe des aldéhydes en C₁-C₁₀, des oxydes d'alkylène en C₂-C₄, des épihalogénhydrines, des formals cycliques dérivés de diols, des polymères cycliques du formaldéhyde et de l'acide époxysuccinique, caractérisés en ce que l'on fait réagir les polymères avec des réticulants au moins bifonctionnels du groupe des di- et polyvinyléthers, des diépoxydes, des diesters, des anhydrides, des dinitriles, des composés qui contiennent un groupement ester ou amide ou des composés à deux groupements fonctionnels choisis parmi les groupements chlorure d'acide, amide d'acide et imidoester, de préférence dans un rapport molaire de 1:2 à 1:1,001, en présence d'acides ou d'acides de Lewis, et on hydrolyse éventuellement les groupements ester contenus en liaison polymère.

2. Procédé de préparation de polymères contenant des blocs polyacétal selon la revendication 1, caractérisé en ce que l'on polymérise, en présence d'amorceurs, des esters d'acides carboxyliques contenant des groupements aldéhyde, éventuellement en présence de monomères copolymérisables du groupe des aldéhydes en C₁-C₁₀, des oxydes d'alkylène en C₂-C₄, des épihalogénhydrines, des formals cycliques dérivés de diols, des polymères cycliques du formaldéhyde et de l'acide époxysuccinique, on fait réagir les polymères formés avec des réticulants au moins bifonctionnels du groupe des di- et polyvinyléthers, des diépoxydes, des diesters, des anhydrides, des dinitriles, des composés qui contiennent un groupement ester ou amide ou des composés à deux groupements fonctionnels choisis parmi les groupements chlorure d'acide, amide d'acide et imidoester, en présence d'acides ou d'acides de Lewis, et on hydrolyse éventuellement les groupements ester contenus en liaison polymère.

3. Procédé selon la revendication 2, caractérisé en ce que l'on utilise, comme esters d'acides carboxyliques contenant des groupements aldéhyde, des esters d'acide glyoxylique et d'alcools à 1-4 atomes de carbone et, comme réticulants au moins bifonctionnels, des divinyléthers, des diépoxydes, des anhydrides, des dinitriles, des diesters et/ou des diamides.

4. Procédé selon la revendication 2, caractérisé en ce que l'on utilise, comme ester d'acide carboxylique contenant des groupements aldéhyde, de l'ester méthylique d'acide glyoxylique et, comme réticulants, des diols à 2-6 atomes de carbone vinylés deux fois, des polyalkylèneglycols vinylés deux fois ou des polytétrahydrofurannes vinylés deux fois.

5. Utilisation des polymères contenant des blocs polyacétal selon la revendication 1, comme additif à des produits de lavage et de nettoyage dépourvus de phosphates ou à teneur réduite en phosphates et comme anti-incrustant.

6. Utilisation des polymères contenant des blocs polyacétal selon la revendication 1, comme agent de dispersion pour pigments.
